Europäisches Patentamt

European Patent Office

Office européen des brevets

(19)

(11) Publication number: 0 372 079
A1

# EUROPEAN PATENT APPLICATION
## published in accordance with Art. 158(3) EPC

(12)

(21) Application number: 89902070.5

(22) Date of filing: 03.02.89

(86) International application number:
PCT/JP89/00110

(87) International publication number:
WO 89/07291 (10.08.89 89/18)

(51) Int. Cl.⁵: G05B 19/403

(30) Priority: 03.02.88 JP 23458/88

(43) Date of publication of application:
13.06.90 Bulletin 90/24

(84) Designated Contracting States:
DE FR GB IT

(71) Applicant: FANUC LTD
3580, Shibokusa Aza-Komanba Oshino-mura
Minamitsuru-gun Yamanashi 401-05(JP)

(72) Inventor: SEKI, Masaki
3-15-2-406, Takaido-nishi
Suginami-ku Tokyo 168(JP)
Inventor: SAMUKAWA, Koji Fanuc Dai-3
Virakaramatsu
3527-1, Shibokusa Oshino-mura
Minamitsuru-gun Yamanashi 401-05(JP)
Inventor: MEGURO, Hidenori Fanuc Dai-3
Virakaramatsu
3527-1, Shibokusa Oshino-mura
Minamitsuru-gun Yamanashi 401-05(JP)

(74) Representative: Billington, Lawrence Emlyn et
al
HASELTINE LAKE & CO Hazlitt House 28
Southampton Buildings Chancery Lane
London WC2A 1AT(GB)

(54) METHOD FOR PRODUCING COMPOUND CURVED SURFACE.

(57) A new free curved surface (SS3) is produced by combining via a predetermined boundary line (BDY) a geometrically defined free curved surface (SS2) and a free curved surface (SS1) defined by the dots obtained by digitizing a model, and compound curved surface cutting paths (SKD) are made by using this surface (SS3).

FIG. I (a)

FIG. I (b)

## DESCRIPTION

## COMPLEX CURVED SURFACE GENERATING METHOD

Technical Field

This invention relates to a method of generating a complex curved surface and, more particularly, to a method of generating a complex curved surface by combining a free curved surface obtained by digitizing a model and a free curved surface defined by a geometric method.

Background Art

Two methods, described below, have been developed and put into practice to create NC machining data for subjecting the shape of a three-dimensional free curved surface to NC machining. The first method, a detailed description of which is given in, e.g., USP 4,491,906, registered in the United States on January 1, 1985, and USP 4,589,062, registered in the United Stated on May 13, 1986, involves giving a predetermined section curve by a geometric method, computing the coordinates of a number of points x, y, z on a free curved surface in accordance with predetermined rules using the given section curve data, and creating NC machining data using the coordinates of this group of points. The second method, a detailed description of which is given in, e.g., the specification of U.S. Serial No. 031,559, filed in the United States on February 12, 1987, involves providing a model, monitoring the position of a stylus while surface-tracing the surface of the model, reading in the position data to digitize the model surface, and creating NC data, which will perform machining in accordance with the shape of the model, using point-sequence data on the digitized model surface.

The first or geometric method is disadvantageous in that a great deal of labor is involved in creating an irregular, complicated free curved surface, and in that the operation for creating the free curved surface requires an exorbitant amount of time. With the second or digitizing method, a drawback is that the surface of the model cannot be defined by a group of points unless the entire model surface is digitized, even if it is a regular, simple free curved surface. Another problem is that such digitizing requires a great amount of time. Accordingly, in a case where a free curved surface which is a combination of a complicated, irregular curved surface and a regular, simple curved surface is to be machined, the operation for forming the NC data needed to machine such a free curved surface requires an exorbitant amount of time, regardless of which of the first and second methods is used.

Accordingly, an object of the present invention is to provide a complex curved surface generation method through which a free curved surface such as that of a complicated mold can be created with ease by combining a free curved surface obtained by digitizing a model of the actual object and a free curved surface defined by a group of points obtained by a geometric method.

Disclosure of the Invention

In accordance with the complex curved surface generation method of the present invention, a free curved surface defined geometrically and a free curved surface defined by a group of points obtained by digitizing a model are combined to generate a new free curved surface.

Brief Description of the Drawings

Fig. 1 is a schematic explanatory view of the present invention;

Fig. 2 is a block diagram illustrating a complex curved surface generating system according to the method of the invention;

Figs. 3 and 4 are views for describing digitized data;

Fig. 5 is a view for describing free curved surface data based on a geometric method;

Fig. 6 is a view for describing a complex free curved surface; and

Fig. 7 is a view for describing paths along which a complex curved surface is cut.

Best Mode for Carrying Out the Invention

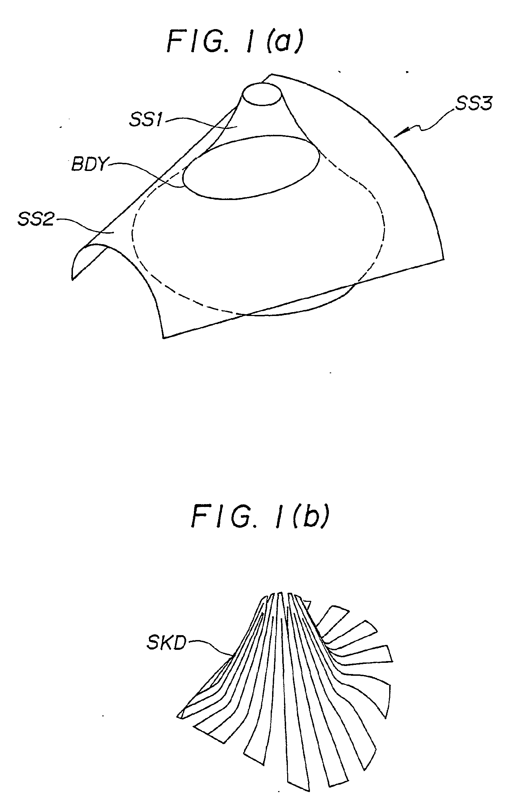

Fig. 1 is a schematic explanatory view of the present invention, in which (a) is a view for describing free curved surfaces and (b) is a view for describing paths along which a complex curved surface is cut.

SS1 represents a free curved surface obtained by digitizing, SS2 a free curved surface defined geometrically, BDY a boundary, and SKD a complex curved surface cutting path.

The free curved surface SS2 obtained geometrically and the free curved surface SS1 defined by a group of points obtained by digitizing a model are combined via the predetermined boundary BDY to generate a new free curved surface SS3, and the complex curved surface cutting path SKD is created using the complex free curved surface SS3.

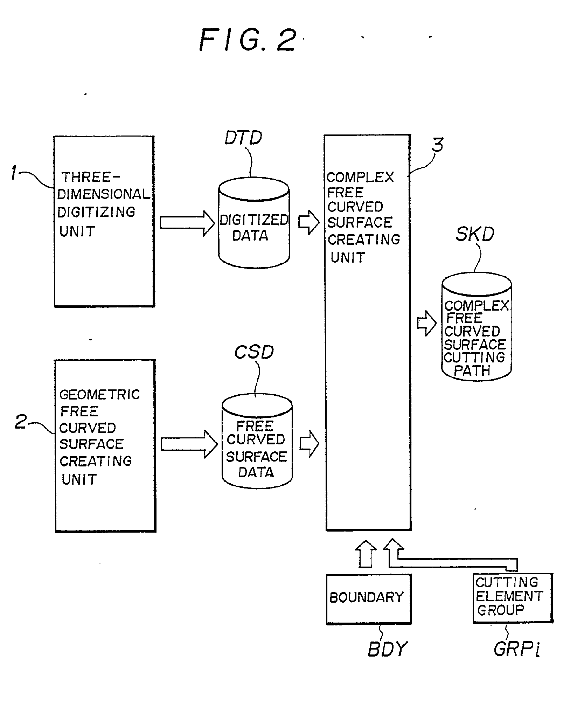

Fig. 2 is a block diagram showing a complex curved surface generating system according to the method of the invention. Shown in Fig. 2 are a three-dimensional digitizing unit 1, digitized data (position data indicative of a group of points) DTD created using the three-dimensional digitizing unit 1, a geometric, free curved surface creating unit 2, free curved surface data (position data indicative of a group of points) CSD generated using the geometric, free curved surface creating unit 2, a complex, free curved surface generating unit 3, and a complex curved surface cutting path SKD obtained by combining the digitized data DTD and free curved surface data CSD.

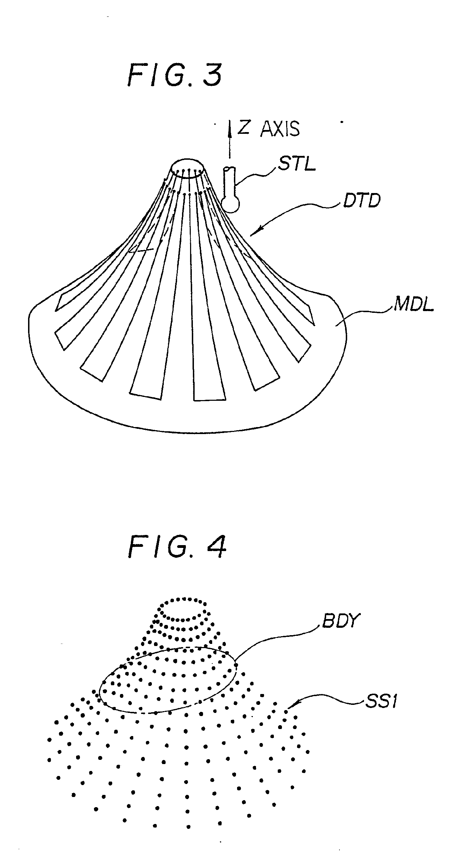

A model MDL (see Fig. 3) is provided, a stylus STL of the three-dimensional digitizing unit 1 is moved at a predetermined tracing velocity in a predetermined direction and is allowed to rise and fall in the direction of the Z axis along the surface of the model MDL (this is surface tracing). In parallel with surface tracing, the model surface is digitized by reading in three-dimensional position data and stylus displacement components $\varepsilon x$, $\varepsilon y$, $\varepsilon z$ (the direction of the resultant vector of $\varepsilon x$, $\varepsilon y$, $\varepsilon z$ is the offset direction) from the stylus at a predetermined time interval, and the digitized data DTD, which are for specifying the free curved surface SS1 by the group of points obtained, are generated (Fig. 4).

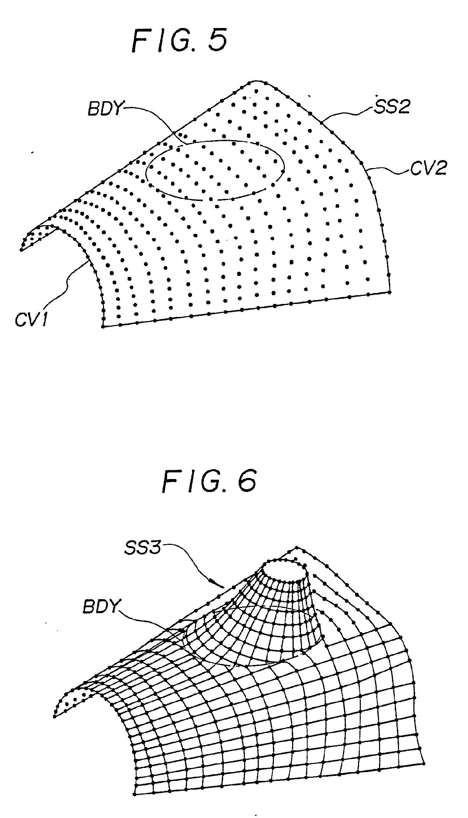

The geometric, free curved surface creating unit 2 is used to equally partition a section curve CV1 (see Fig. 5) and a section curve CV2, connect corresponding partitioning points with straight lines, and create the free curved surface data CSD which specify the free curved surface SS2 by the groups of points on these straight lines.

Thereafter, the data specifying the boundary BDY are fed into the complex, free curved surface generating unit 3, and the vertical relationship between the free curved surface SS1 and the free curved surface SS2 combined at the boundary BDY is designated by vertical relationship along the Z axis. For example, a designation is made to the effect that the free curved surface SS1 is above the free curved surface SS2 in relation to the boundary BDY.

When the boundary and vertical relationship are thus specified, the complex, free curved surface generating unit 3 generates the complex free curved surface SS3 shown in Fig. 6. It should be noted that the complex free curved surface SS3 is generated by picking up points on the inner side of the boundary BDY with regard to the free curved surface SS1 and picking up points on the outer side of the boundary BDY with regard to the free curved surface SS2.

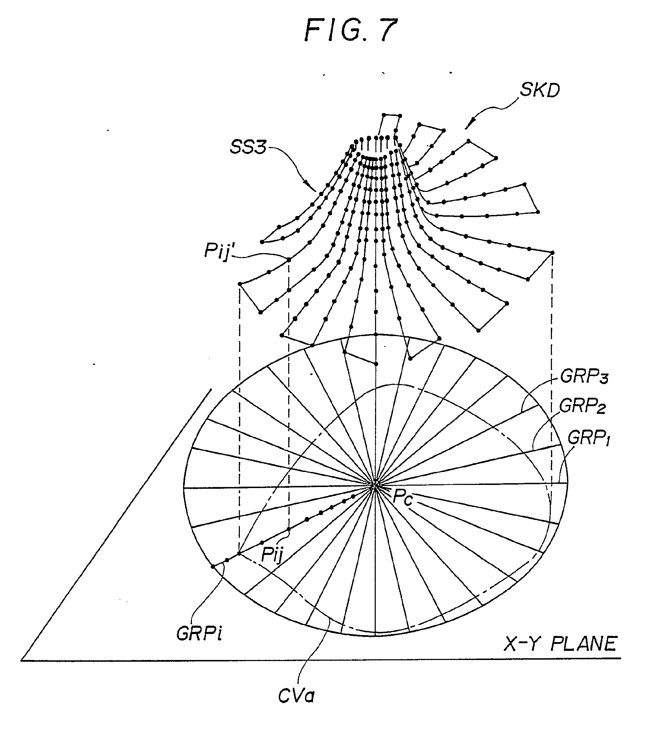

Fig. 7 is a view for describing the generation of paths along which the complex curved surface SS3 is cut. In Fig. 7, GRPi (i = 1, 2, ...) represents a group of cutting elements obtained when the cutting paths are projected onto the X-Y plane. These elements are defined as radiating outwardly at equal angles from a center point Pc. CVa represents an area indicating a machining range designated on the group of cutting elements GRPi.

When the group of cutting elements GRPi for the complex free curved surface SS3 is designated, the complex, free curved surface generating unit 3 generates the complex curved surface cutting path SKD by projecting the group of cutting elements GRPi onto the complex free curved surface SS3. More specifically, the complex, free curved surface generating unit 3 projects a point Pi,j on the cutting element group GRPi onto the complex free curved surface SS3 and obtains a point of intersection Pi,j' with the complex free curved surface SS3. Similarly, points of intersection with the complex free curved surface SS3 are obtained with regard to each point on all of the radiating cutting elements GRPi (i = 1, 2, ...), thereby creating the complex curved surface cutting path SKD. A method of obtaining the complex curved surface cutting path SKD by giving the cutting element group GRPi is described in detail in the specification of US Serial No. 928,288 filed in the United States on October 23, 1986.

Thus, in accordance with the present invention as described above, it is arranged to create a new free curved surface by combining a free curved surface obtained by digitizing a model of an actual object and a free curved surface defined geometrically. As a result, a free curved surface such as that of a complicated mold can be generated with ease and the creation of NC data for machining the generated free curved surface is facilitated.

CLAIMS:

1.    A complex curved surface generating method for generating a complex curved surface comprising at least two free curved surfaces, characterized by comprising the steps of:

generating a first free curved surface by giving geometric data;

generating a second free curved surface by a group of points obtained by digitizing a model surface;

specifying a boundary between the first free curved surface and the second free curved surface; and

generating a new free curved surface by combining the first and second free curved surface via said boundary.

2.    A complex curved surface generating method according to claim 1, characterized by generating a complex curved surface by selecting one free curved surface with regard to an inner side of said boundary and selecting another free curved surface with regard to an outer side of said boundary.

*FIG. I (a)*

*FIG. I (b)*

# FIG. 2

# FIG. 3

# FIG. 4

## F I G. 5

## F I G. 6

# FIG. 7

# INTERNATIONAL SEARCH REPORT

International Application No `PCT/JP89/00110`

## I. CLASSIFICATION OF SUBJECT MATTER (if several classification symbols apply, indicate all) ·

According to International Patent Classification (IPC) or to both National Classification and IPC

Int. Cl$^4$ G05B19/403

## II. FIELDS SEARCHED

### Minimum Documentation Searched ·

| Classification System | Classification Symbols |
|---|---|
| IPC | G05B19/403 |

### Documentation Searched other than Minimum Documentation to the Extent that such Documents are Included in the Fields Searched ·

| | |
|---|---|
| Jitsuyo Shinan Koho | 1971 – 1988 |
| Kokai Jitsuyo Shinan Koho | 1971 – 1988 |

## III. DOCUMENTS CONSIDERED TO BE RELEVANT ·

| Category · | Citation of Document, [11] with indication, where appropriate, of the relevant passages [12] | Relevant to Claim No. [13] |
|---|---|---|
| Y | JP, A, 61-11809 (Fanuc Ltd.)<br>20 January 1986 (20. 01. 86)<br>Page 3, upper left column, line 7 to<br>upper right column, line 7<br>(Family: none) | 1, 2 |
| Y | JP, A, 62-269204 (Amada Metrecs Co., Ltd.)<br>21 November 1987 (21. 11. 87)<br>Page 2, upper right column, line 9 to<br>page 3, upper left column, line 1<br>(Family: none) | 1, 2 |
| Y | JP, A, 57-5109 (Fujitsu Fanuc, Ltd.)<br>11 January 1982 (11. 01. 82)<br>Page 7, lower right column,<br>line 15 to page 8, lower left column,<br>line 15 & EP, A, 41854 & KR, B, 8401350<br>& US, A, 4491906 | 1, 2 |

* Special categories of cited documents: [10]
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art
"&" document member of the same patent family

## IV. CERTIFICATION

| Date of the Actual Completion of the International Search | Date of Mailing of this International Search Report |
|---|---|
| April 6, 1989 ,(06. 04. 89) | April 17, 1989 (17. 04. 89) |

| International Searching Authority | Signature of Authorized Officer |
|---|---|
| Japanese Patent Office | |

Form PCT/ISA/210 (second sheet) (January 1985)